# EUROPEAN PATENT APPLICATION

(11) **EP 4 568 244 A1**
(43) Date of publication of application: **11.06.2025**
(21) Application number: 23850319.7
(22) Date of filing: 25.07.2023
(51) Int. Cl.: H04N 19/154, H04N 19/136

(54) **ADAPTIVE ENCODING PARAMETER MANAGEMENT METHOD AND ELECTRONIC DEVICE SUPPORTING SAME**

(30) Priority: 01.08.2022 KR 20220095436; 17.07.2023 KR 20230092758
(71) Applicant: Bae, Tae Meon, Seoul 05503 (KR)
(72) Inventor: Bae, Tae Meon, Seoul 05503 (KR)
(74) Representative: Isarpatent
(86) International application number: PCT/KR2023/010702
(87) International publication number: WO 2024/029812

(57) **Abstract**

The present invention pertains to an adaptive video encoding parameter management method and an electronic device supporting same, the method comprising the steps of: obtaining, by a server processor of a server device, video content; distinguishing between video scenes in the video content; obtaining video clips corresponding to a portion of each of the video scenes; selecting at least some encoding parameters from among all encoding parameters related to a video encoder, which are to encode the video content, and performing video encoding on each of the video clips on the basis of encoding parameter values set in the selected at least some encoding parameters; calculating final encoding parameter values to be applied to each of the video clips on the basis of an encoding result of the video encoding; and performing video encoding on the video content by applying the calculated final encoding parameter values to the video scenes.

## Description

### [Technical Field]

The present invention relates to video data processing of an electronic device, and more particularly, to a method for adaptively operating encoding parameters.

### [Background Art]

Video encoders such as H.264, HEVC (High-Efficiency Video Coding) (H.265), VVC (H.266), and AV1 (Advanced Video Coding) provide various parameters for setting the video encoder in addition to the input video information. For example, in the case of H.264, various encoding parameters including GOP (Group Of Pictures) size, number of b frames, number of reference frames, whether to apply de-blocking, number of threads, ip-ratio, and pb-ratio are included for encoding one video content.

Such encoding parameters affect the compression efficiency and encoding time of the video encoder. It is therefore necessary to determine appropriate encoding parameter values for the encoding parameters in order to optimize the compression efficiency and encoding time of the video encoder. However, since there are so many encoding parameters applied to the video encoder, it is not easy to determine optimal encoding parameter values. For example, in the case of X.264 which is an open source implementation of H.264, there are over 70 parameters, and assuming that each encoding parameter has about 5 option values, calculations for 5^70 cases are required to determine the encoding parameter values. Therefore, it is nearly impossible to test all cases for the encoding parameters of a specific video encoder. Accordingly, the current scheme of determining the encoding parameter values of the video encoder is to define presets such as fast, medium, and slow that predetermine the encoding parameter values from the viewpoint of a trade-off between the compression efficiency and the encoding time, and select a preset that meets requirements for the encoding time or the video compression ratio.

Since it is very difficult for users to set such encoding parameter values in detail, each video encoder vendor generally provides presets in which encoding parameter values are previously set according to the encoding time (or computational complexity) through many experiments. In the case of X.264, it provides presets such as ultrafast, superfast, veryfast, faster, fast, medium, slow, slower, veryslow, and placebo. However, since the provided presets are not configured to suit all video contents, encoding performance varies depending on the video contents or the video codec.

### [Disclosure]

### [Technical Problem]

The present invention is intended to provide an adaptive encoding parameter operation method capable of improving a compression ratio for each video content through adaptive encoding parameter optimization for the video content, and an electronic device supporting the same.

However, the objects of the present invention are not limited to the above objects, and other objects not mentioned can be clearly understood from the description below.

### [Technical Solution]

In order to accomplish the above object, an adaptive video encoding parameter operation method includes, by a server processor of a server device, obtaining video content, segmenting the video content into video scenes, obtaining video clips corresponding to some of the respective video scenes, performing video encoding on each of the video clips based on encoding parameter values set for at least some encoding parameters among all encoding parameters related to a video encoder to encode the video content, calculating final encoding parameter values to be applied to each of the video clips based on an encoding result of the video encoding, and performing video encoding on the video content by applying the calculated final encoding parameter values to the video scenes, wherein calculating the final encoding parameter values includes assigning array indexes to the encoding parameter values of the at least some encoding parameters, selecting a plurality of array indexes among the array indexes in accordance with a predefined scheme, and performing encoding on the video clips based on a plurality of encoding parameter values corresponding to the selected array indexes to detect encoding parameter values of optimal quality.

Specifically, calculating the encoding parameter values of the optimal quality may include selecting a first plurality of encoding parameters from among all encoding parameters related to the video encoder, and performing a plurality of video encodings on a specific video clip by using a plurality of encoding parameter values set to the selected first plurality of encoding parameters, and calculating a first encoding parameter value of highest quality by comparing qualities of the plurality of video encoding results.

Specifically, calculating the encoding parameter values of the optimal quality may include selecting a second plurality of encoding parameters different from the first plurality of encoding parameters, and performing a plurality of video encodings on the specific video clip by using a plurality of encoding parameter values set to the selected second plurality of encoding parameters, calculating a second encoding parameter value of highest quality for the specific video clip by comparing qualities of the plurality of video encoding results, and comparing a video encoding quality of the first encoding parameter value and a video encoding quality of the second encoding parameter value with each other to select an encoding parameter value of highest quality as the final encoding parameter value.

Specifically, the method may include video-encoding a video scene to which the specific video clip belongs based on the final encoding parameter value.

Specifically, calculating the final encoding parameter values may include classifying the entire encoding parameters by characteristics, sampling encoding parameters from each of encoding parameter groups classified by the characteristics, and video-encoding the video clips with encoding parameter values set to the sampled encoding parameters, selecting a plurality of encoding parameters from a group including a specific encoding parameter value indicating a highest quality encoding result, video-encoding the video clips based on encoding parameter values set to the selected plurality of encoding parameters, and calculating an encoding parameter value of highest quality among the encoding results as the final encoding parameter.

Specifically, the method may further include defining the entire encoding parameters as an array index, and defining the array index may include at least one of generating the array index by sorting predefined assignable values for encoding parameters having a limited length of encoding parameter, generating an array index having a limited number by discretizing encoding parameters having continuous values through quantization, or generating an array index by sorting categorical series encoding parameters based on computational complexity.

Specifically, performing video encoding on each of the video clips may include performing downsampling for each of the video clips, and performing video encoding on the downsampled video clips.

According to an embodiment of the present invention, a server device supporting an adaptive video encoding parameter operation includes a server memory storing video content, and a server processor functionally connected to the server memory. The server processor is configured to obtain video content, segment the video content into video scenes, obtain video clips corresponding to some of the respective video scenes, perform video encoding on each of the video clips based on encoding parameter values set for at least some encoding parameters among all encoding parameters related to a video encoder to encode the video content, calculate final encoding parameter values to be applied to each of the video clips based on an encoding result of the video encoding, and perform video encoding on the video content by applying the calculated final encoding parameter values to the video scenes, and the server processor is configured to assign array indexes to the encoding parameter values of the at least some encoding parameters, select a plurality of array indexes among the array indexes in accordance with a predefined scheme, and perform encoding on the video clips based on a plurality of encoding parameter values corresponding to the selected array indexes to detect encoding parameter values of optimal quality.

Specifically, the server processor may be configured to select a first plurality of encoding parameters from among all encoding parameters related to the video encoder, perform a plurality of video encodings on a specific video clip by using a plurality of encoding parameter values set to the selected first plurality of encoding parameters, and calculate a first encoding parameter value of highest quality by comparing qualities of the plurality of video encoding results.

Specifically, the server processor may be configured to select a second plurality of encoding parameters different from the first plurality of encoding parameters, perform a plurality of video encodings on the specific video clip by using a plurality of encoding parameter values set to the selected second plurality of encoding parameters, calculate a second encoding parameter value of highest quality for the specific video clip by comparing qualities of the plurality of video encoding results, and compare a video encoding quality of the first encoding parameter value and a video encoding quality of the second encoding parameter value with each other to select an encoding parameter value of highest quality as the final encoding parameter value.

Specifically, the server processor may be configured to video-encode a video scene to which the specific video clip belongs based on the final encoding parameter value.

Specifically, the server processor may be configured to classify the entire encoding parameters by characteristics, video-encodes the video clips based on encoding parameter values of encoding parameters sampled from encoding parameter groups classified by the characteristics, and select a plurality of encoding parameters from a group including a specific encoding parameter value indicating a highest quality encoding result.

Specifically, the server processor may be configured to select a plurality of encoding parameters from a group containing the specific encoding parameter value, video-encode the video clips based on encoding parameter values set to the selected plurality of encoding parameters, and calculate an encoding parameter value of highest quality among the encoding results as the final encoding parameter.

Specifically, the server processor may be configured to, in relation to defining the entire encoding parameters as an array index, generate the array index by sorting predefined assignable values for encoding parameters having a limited length of encoding parameter, generate an array index having a limited number by discretizing encoding parameters having continuous values through quantization, or generate an array index by sorting categorical series encoding parameters based on computational complexity.

Specifically, the server processor may be configured to perform downsampling for each of the video clips, and perform video encoding on the downsampled video clips.

### [Advantageous Effects]

According to the present invention, it is possible to provide optimization of encoding parameter values related to the compression efficiency of a specific video encoder for each video content by calculating and operating encoding parameter values having an optimal compression ratio of each video content.

In addition, various effects other than the above-mentioned effects can be directly or implicitly disclosed in the detailed description according to embodiments of the present invention to be described later.

### [Description of Drawings]

FIG. 1 is a diagram showing an example of a video encoder operating environment according to an embodiment of the present invention.
FIG. 2 is a diagram showing an example of components of a user terminal according to an embodiment of the present invention.
FIG. 3 is a diagram showing an example of components of a server device according to an embodiment of the present invention.
FIG. 4 is a diagram showing an example of components of a server processor according to an embodiment of the present invention.
FIG. 5 is a diagram showing an example of an adaptive encoding parameter operation method according to an embodiment of the present invention.
FIG. 6 is a diagram showing another example of an adaptive encoding parameter operation method according to an embodiment of the present invention.

### [Mode for Disclosure]

Now, embodiments of the present invention will be described in detail with reference to the accompanying drawings.

However, in the following description and the accompanying drawings, well known functions and components may not be described nor illustrated in detail to avoid obscuring the subject matter of the present invention. In addition, identical components are indicated with the same reference numerals as much as possible throughout the drawings

The terms or words used in the following description and drawings should not be interpreted as limited to their usual or dictionary meanings and should be interpreted as meanings and concepts that conform to the technical idea of the present invention based on the principle that the inventor can appropriately define the concept of the terms to best describe his or her invention. Therefore, embodiments described herein are only the most preferred embodiments of the present invention and do not represent all of the technical ideas of the present invention. Thus, it should be understood that there may be various equivalents and modified examples that can replace the embodiments at the time of filing this application.

In addition, terms including ordinal numbers such as first, second, etc. are used to describe various elements only for the purpose of distinguishing one element from another, and are not used to limit such elements. For example, without departing from the scope of the present invention, a second element may be named a first element, and similarly, a first element may also be named a second element.

In addition, terms used herein are only for describing specific embodiments and do not limit the present disclosure. The singular expression includes the plural expression unless the context clearly indicates otherwise. Also, the terms such as "comprise" and "include" used herein are intended to specify the presence of features, numerals, steps, operations, elements, components, or combinations thereof, which are disclosed herein, and should not be construed to exclude in advance the possibility of the presence or addition of other features, numerals, steps, operations, elements, components, or combinations thereof.

In addition, the terms such as "unit" and "module" used herein refer to a unit that processes at least one function or operation and may be implemented with hardware, software, or a combination of hardware and software. In addition, the terms "a", "an", "one", "the", and similar terms may be used as both singular and plural meanings in the context of describing the present invention (especially in the context of the following claims) unless the context clearly indicates otherwise.

In addition to the terms mentioned above, specific terms used in the following description are provided to help understanding of the present invention, and the use of such specific terms may be changed to other forms without departing from the technical meaning of the present invention.

Also, embodiments within the scope of the present invention include computer-readable media having computer-executable instructions or data structures stored on computer-readable media. Such computer-readable media can be any available media that is accessible by a general purpose or special purpose computer system. By way of example, such computer-readable media may include, but not limited to, RAM, ROM, EPROM, CD-ROM or other optical disk storage, magnetic disk storage or other magnetic storage devices, or any other physical storage medium that can be used to store or deliver certain program codes formed of computer-executable instructions, computer-readable instructions or data structures and which can be accessed by a general purpose or special purpose computer system.

Hereinafter, various embodiments related to adaptive operation of video encoding parameters will be described based on the drawings.

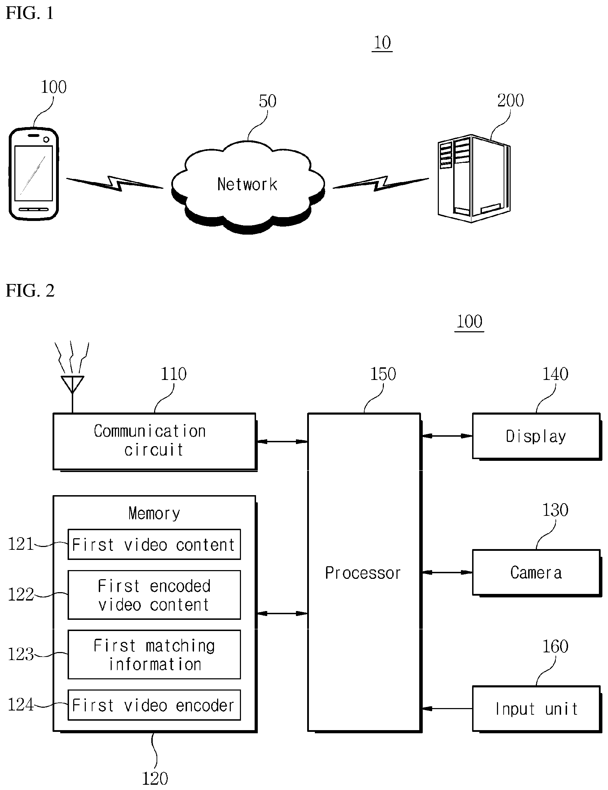

FIG. 1 is a diagram showing an example of a video encoder operating environment according to an embodiment of the present invention.

Referring to FIG. 1, the electronic device operating environment 10 according to an embodiment of the present invention may include, for example, a network 50, a user terminal 100, and a server device 200. The user terminal 100 and the server device 200 may be one of the electronic devices.

The network 50 can support forming at least one communication channel among communication channels between the user terminal 100 and the server device 200. The network 50 may include, for example, a communication circuit that can be connected by wire or wirelessly with at least one of the user terminal 100 and the server device 200 mentioned above. In an example, the network 50 can form a communication channel with the server device 200 based on the user terminal 100 and deliver a message according to a request of the user terminal 100 to the server device 200. The network 50 can transmit video content stored in the server device 200 to the user terminal 100. In relation to the wireless connection, the network 50 may include an Internet network element or may include at least one base station and a base station controller. The network 50 according to an embodiment of the present invention is not limited to a specific communication type, communication scheme, communication generation, etc., and may include communication equipment that supports at least one of various communication schemes for signal flow between the user terminal 100 and the server device 200.

The user terminal 100 can form a communication channel with the server device 200 through the network 50. The user terminal 100 can transmit video content stored in the memory to the server device 200 in response to a user input. Also, the user terminal 100 can receive video content from the server device 200 and store it in the memory. Additionally, the user terminal 100 may include a camera and collect video content through the camera. The user terminal 100 can provide the video content collected using the camera to the server device 200 in response to a request from the server device 200.

For example, according to the present invention, the user terminal 100 can perform operations of segmenting the video content into scenes and determining optimized video encoding parameter values for the segmented scenes, and perform encoding on the acquired video content by applying the determined encoding parameter values. In an example, the user terminal 100 may perform encoding on video content stored in the memory by using a specific video encoder. In this process, the user terminal 100 may segment the video content into scenes, then group the segmented scenes into a certain group (e.g., a video clip of X seconds based on a scene, where X is a natural number), and perform encoding on the scene group by applying the encoding parameter values of at least some of a plurality of encoding parameters provided by the video encoder to the scene group, while selecting (or determining) an encoding parameter value having the optimal quality, and encoding the corresponding scene group with the selected (or determined) optimal encoding parameter value. In addition, the user terminal 100 can store, in the memory, matching information in which the selected optimal encoding parameter value and the corresponding scene group are matched with each other. The user terminal 100 can transmit encoded video content that integrates the encoded scene groups to the server device 200. Meanwhile, although one user terminal 100 is exemplified for the video encoder operating environment 10, the present invention is not limited thereto. For example, in addition to the user terminal 100, other user terminals capable of forming a communication channel with the user terminal 100 or the server device 200 through the network 50 may be further included in the video encoder operating environment 10. These other user terminals may also support the function of selecting the optimal encoding parameter value and generating video content encoded per scene group as provided by the user terminal 100. In addition, these other user terminal may also provide the encoded video content and the matching information to the user terminal 100 or the server device 200.

The server device 200 can collect video content through various routes. For example, the server device 200 can collect video content from at least one user terminal 100. Alternatively, the server device 200 can form a communication channel with a specific external server device that produces and distributes video content, and receive video content from the external server device. In an example, the server device 200 may perform encoding on video content stored in the server memory using a specific video encoder. In this process, the server device 200 may perform scene-based segmentation for the video content, then group the segmented scenes into a certain group (e.g., a video clip of X seconds based on a scene, where X is a natural number), and perform encoding on the scene group by applying the encoding parameter values of at least some of a plurality of encoding parameters provided by the specific video encoder to the scene group, while selecting an encoding parameter value having the optimal quality, and encoding the corresponding scene group with the selected optimal encoding parameter value. In addition, the server device 200 can store, in the server memory, matching information in which the selected optimal encoding parameter value and the corresponding scene group are matched with each other. The server device 200 can store a plurality of video encoders. Thus, for each video encoder, the server device 200 can perform the scene group extraction, the selection of optimal encoding parameter values for respective scenes, and the encoding operation using the selected optimal encoding parameter values. When the user terminal 100 is connected via the network 50, the server device 200 can provide the user terminal 100 with a screen for selecting at least one video encoder and a screen for selecting at least one encoded video content. Upon request from the user terminal 100, the server device 200 can provide a specific video encoder and a specific encoded video content to the user terminal 100.

Meanwhile, it is exemplified in the above description that one user terminal 100 and one server device 200 are connected via the network 50 in the video encoder operating environment 10, but the present invention is not limited thereto. For example, in the video encoder operating environment 10, a plurality of sub-server devices instead of the user terminal 100 may be connected to the server device 200 via the network 50, and when the server device 200 provides video contents to the sub-server devices, the sub-server devices can perform scene group extraction on the provided video contents, select optimal encoding parameter values for the extracted scene groups, perform video content encoding using the selected encoding parameter values, and provide the encoded video contents to the server device 200. Here, the sub-server devices may provide the server device 200 with matching information in which scene group information and selected encoding parameter values are matched to each other. The server device 200 may provide video contents encoded with optimal encoding parameter values for respective scene groups to the user terminal 100 upon request of the user terminal 100, while also providing the matching information. In addition, the server device 200 may provide the user terminal 100 with a video decoder related to encoding parameters (or encoding parameter values), and the user terminal 100 may perform playback of the encoded video content by downloading and installing the video decoder.

As described above, the operation of selecting optimal encoding parameter values and encoding video content by scene group based on the selected encoding parameter values according to an embodiment of the present invention can be performed independently in at least one of the user terminal 100 having the installed video encoder and the server device 200 providing the video encoder.

FIG. 2 is a diagram showing an example of components of a user terminal according to an embodiment of the present invention.

Referring to FIG. 2, the user terminal 100 according to an embodiment of the present invention may include a communication circuit 110, a memory 120, a camera 130, a display 140, and a processor 150. The user terminal 100 may be any one of various electronic devices capable of computing operations, such as, for example, a portable communication device and a desktop computing device. The user terminal 100 including such components may be a consumer that receives and consumes matching information that matches optimal encoding parameter values by scene groups according to an embodiment of the present invention and video content encoded with the corresponding encoding parameter values from the server device 200, and may also be a supplier that can generate matching information and encoded video content and provide them to the server device 200.

The communication circuit 110 can support forming a communication channel of the user terminal 100. For example, the communication circuit 110 may include at least one communication module for supporting communication schemes of various generation such as 3G (generation), 4G, 5G, and 6G. The communication circuit 110 can form a communication channel with the network 50 according to the setting of the user terminal 100 or in response to a user input, and access the server device 200 based on input address information. The communication circuit 110 can receive various data or programs through the communication channel formed with the server device 200 under the control of the processor 150. For example, the communication circuit 110 may receive at least one video encoder from the server device 200 in response to a user input. Also, the communication circuit 110 may receive firmware capable of updating the at least one video encoder from the server device 200. In addition, the communication circuit 110 may receive at least one video content from the server device 200. The at least one video content received from the server device 200 may include, for example, encoded video content and matching information in which optimal encoding parameter values are matched for each scene group. In another example, the communication circuit 110 may transmit video content collected by the camera 130 in response to a user's manipulation to the server device 200. In this process, the video content transmitted to the server device 200 may include matching information in which optimal encoding parameter values are selected for each scene group, and encoded video content in which scene groups are encoded with the corresponding encoding parameter values.

The memory 120 can store at least one program related to the operation of the user terminal 100 and data for the program operation. In an example, the memory 120 may store first video content 121 acquired through the camera 130. Also, the first video content 121 stored in the memory 120 may be received and stored from the server device 200, an external server device, or another user terminal. In addition, the memory 120 may store first video content 122 encoded in accordance with the scheme of the present invention (e.g., the scheme of encoding the first video content 121 with optimal encoding parameter values for each scene group). The memory 120 may store first matching information 123 generated while encoding the first video content 121 into the first encoded video content 122. The first matching information 123 may include information on scene groups of the first video content 121 and information on encoding parameter values applied to encode the scene groups. The memory 120 may include at least one first video encoder 124 for encoding the first video content 121. The first video encoder 124 may be formed, for example, at least in part, as a software module. Alternatively, the first video encoder 124 may be formed, for example, at least in part, as a hardware module. The first video encoder 124 may be received and stored in advance from the server device 200. The first video encoder 124 may be activated for encoding the first video content 121.

The camera 130 can capture still images or moving images. For example, the camera 130 may capture a specific subject or a background including the subject under the control of the processor 150 or in response to a user input, and transmit the captured video content to the memory 120. The first video content 121 stored in the memory 120 may include various scenes in response to the operation of the camera 130.

The display 140 can output at least one screen related to the operation of the user terminal 100. For example, the display 140 may output an access screen provided by the server device 200 or a usage screen of the server device 200 according to the operation of the communication circuit 110. For example, the display 140 may output a screen for selecting at least one video encoder provided by the server device 200, a video encoder selection and download screen, and a video encoder installation screen. The display 140 may output a list of at least one encoded video content provided by the server device 200. When a specific video content is selected, the display 140 may output a screen for downloading a video player necessary for playing the corresponding video content. Alternatively, when a video player capable of playing the selected video content is already installed, the display 140 may output downloaded (or streamed) video content through the video player.

The display 140 can output a screen related to the operation of the camera 130. For example, when the camera 130 operates in a video shooting mode, the display 140 may display video content being currently shot. The display 140 may provide a control screen for recording, saving, deleting, etc. of the video content during the video content display process. The display 140 may output at least one of a list of the first video content 121, a list of the first encoded video content 122, a list of the first matching information 123, and installation information of the first video encoder 124, stored in the memory 120.

The input unit 160 may include a component that supports a user input related to the operation of the user terminal 100. For example, the input unit 160 may include at least one of various devices such as a keyboard, a keypad, a mouse, a touchscreen, a touchpad, a touch key, a voice input device, a gesture input device, a joystick, and a wheel device. The input unit 160 may create at least one input signal, based on a user input, from among an input signal for requesting a communication connection with the server device 200, an input signal for selecting at least one object (e.g., an object including at least one of the video content list, the encoded video content list, and the video encoder list) on the access screen provided by the server device 200, and an input signal for requesting playback control of the encoded video content.

The processor 150 can perform at least one of transmitting and applying at least one signal related to the operation of the user terminal 100, outputting an applying result, and storing and transmitting data according to the result. For example, when the user terminal 100 operates as a consumer that consumes the encoded video content, the processor 150 may control to form a communication channel with the server device 200 based on the communication circuit 110 in response to a user's manipulation. The processor 150 may receive the encoded video content list from the server device 200, receive specific encoded video content and matching information in response to a user input, and store them in the memory 120. The processor 150 may play back the received encoded video content based on the matching information. In this regard, the processor 150 may execute a video player used to encode the video content. If there is no video player required to play the encoded video content, the processor 150 may notify no installation of the video player, and download and install the corresponding video player from the server device 200 in response to a user's manipulation. The video player may decode the encoded video content by scene group based on the matching information, and output the decoded video frames to the display 140.

When the user terminal 100 operates as a supplier that supplies the encoded video content, the processor 150 may execute the first video encoder 124 stored in the memory 120 in response to a user's manipulation. Upon receiving an input of selecting and encoding the first video content 121 stored in the memory 120, the processor 150 may segment the first video content 121 into scenes and generate scene groups (e.g., video clips) based on the segmented scenes. In this process, the processor 150 may multiply each scene by a preset time in seconds and store scene groups (or video clips) segmented with that time. The processor 150 may collect information on encoding parameters related to the first video encoder 124 and select encoding parameter values having the optimal quality (or the optimal compression efficiency) for each of the segmented and stored scene groups. The processor 150 may encode the scene groups by using the selected encoding parameter values and generate the first encoded video content 122. In this process, the processor 150 may generate the first matching information 123 by matching the encoding parameter values with identification information for the scene groups, and store the first matching information 123 in the memory 120. The first matching information 123 may include identification information of the first video encoder 124. The processor 150 may provide the first encoded video content 122 and the first matching information 123 stored in the memory 120 to another user terminal or the server device 200 upon a request from another user terminal or the server device 200. An operation of generating the first encoded video content 122 by the processor 150 may be substantially the same as an operation of generating second encoded video content 227 by a server processor 250 described below. Thus, the processor's operation related to the generation of the first encoded video content 122 may be at least partially the same as the operation of the server processor 250 with respect to selection and operation of encoding parameter values.

As described above, the user terminal 100 includes the memory 120 that stores video content, and the processor 150 that is functionally connected to the memory 120, and the processor 150 can segment the video content into video scenes, obtain video clips corresponding to some of the respective video scenes, and perform video encoding on each of the video clips by using encoding parameter values of at least some encoding parameters among all encoding parameters related to a video encoder that encodes the video content. The processor 150 can be configured to calculate optimal encoding parameter values to be applied to each of the video clips based on an encoding result of the video encoding, and to perform video encoding on the video content by applying the calculated optimal encoding parameter values to the video scenes. Here, the processor 150 may perform a plurality of video encodings for a specific video clip based on encoding parameter values of a first plurality of encoding parameters with a predetermined condition among all encoding parameters related to the video encoder, and compare the qualities of the plurality of video encoding results to calculate first encoding parameter values with the highest quality. Additionally, in relation to calculating the final encoding parameters, the processor 150 may perform a plurality of video encodings for the specific video clip based on encoding parameter values of a second plurality of encoding parameters with a different condition from the first plurality of encoding parameters with a predetermined condition, and compare the qualities of the plurality of video encoding results to calculate second encoding parameter values with the highest quality for the specific video clip. The processor 150 may compare the video encoding qualities of the first encoding parameter values with those of the second encoding parameter values and thereby select the encoding parameter values with the highest quality as the final encoding parameter values. The above-described optimal encoding parameter value selection process may be repeatedly performed for the respective video clips. The processor 150 may perform, through parallel processing, a first process of calculating the optimal encoding parameter value from the encoding parameter values of the first plurality of encoding parameters described above, and a second process of calculating the optimal encoding parameter value from the encoding parameter values of the second plurality of encoding parameters, thereby more quickly calculating the optimal encoding parameter value for a specific video clip. Meanwhile, the processor 150 may classify all encoding parameters into three or more groups, calculate the optimal encoding parameter values from the respective encoding parameter groups, and compare the calculated optimal encoding parameter values with each other to produce the final optimal encoding parameter value for a specific video clip. In another example, without performing the parallel processing, the processor 150 may select at least some encoding parameters from among all encoding parameters, and calculate the encoding parameter value indicating the optimal encoding efficiency for a specific video clip from among the selected at least some encoding parameters.

Meanwhile, the predetermined condition may include a classification criterion according to the characteristics of encoding parameters. For example, the encoding parameters related to a specific video encoder may be classified by a certain characteristic. For example, encoding parameters having discrete values, encoding parameters having continuous values, and encoding parameters of a categorical series may be included. The processor 150 may classify all the encoding parameters by the above-described characteristic, select at least one encoding parameter from encoding parameter groups classified by the characteristic, video-encode the video clips by using encoding parameter values supporting the selected at least one encoding parameter, and select specific encoding parameter values indicating the highest quality encoding result. The processor 150 may compare encoding results of optimal encoding parameter values by characteristic with each other, and finally video-encode the video clips based on the encoding parameter values of the optimal quality. The above-described operations of the processor 150 may also be performed by the server processor 250 described below.

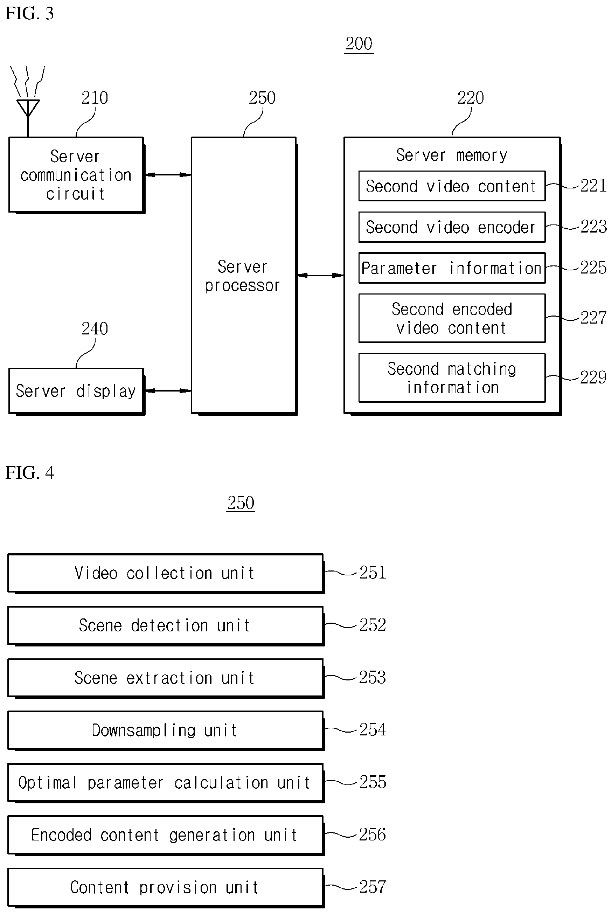

FIG. 3 is a diagram showing an example of components of a server device according to an embodiment of the present invention, and FIG. 4 is a diagram showing an example of components of a server processor according to an embodiment of the present invention.

First, referring to FIG. 3, the server device 200 may include a server communication circuit 210, a server memory 220, a server display 240, and a server processor 250.

The server communication circuit 210 can support forming a communication channel of the server device 200. For example, the server communication circuit 210 may form a communication channel with at least one of another user terminal, another sub-server device, and an external server device that provides video content, and may receive video content from any other electronic device (e.g., the user terminal 100, another user terminal, a sub-server device, or an external server device) forming the communication channel at a certain cycle or in response to an administrator input.

For example, the server communication circuit 210 may form a communication channel with the user terminal 100 based on the network 50 under the control of the server processor 250. The server communication circuit 210 may receive the first video content 121 from the user terminal 100. Also, the server communication circuit 210 may receive the first encoded video content 122 and the first matching information 123 from the user terminal 100. In another example, the server communication circuit 210 may provide at least one of second video content 221, second encoded video content 227, and second matching information 229 stored in the server memory 220 to the user terminal 100 under the control of the server processor 250. In addition, the server communication circuit 210 may provide a program corresponding to at least one second video encoder 223 to the user terminal 100 upon a request from the user terminal 100.

The server memory 220 can store at least one of data and programs related to the operation of the server device 200. For example, the server memory 220 may store at least some of the second video content 221, a second video encoder 223, parameter information 225, the second encoded video content 227, and the second matching information 229. The second video content 221 may include, for example, video content generated by the user terminal 100 through the camera 130. Also, the second video content 221 may be provided from a specific external server device that produces and distributes video content. The second video encoder 223 may include at least one video encoder that the server device 200 can use to convert the second video content 221 into the second encoded video content 227. In an example, the server device 200 may include one video encoder or a plurality of video encoders, and may provide a program corresponding to the video encoder to the user terminal 100 in response to a request from the user terminal 100.

The parameter information 225 may include information on parameters corresponding to the second video encoder 223. For example, when the second video encoder 223 is X.265, the parameter information 225 may include at least some of encoding parameters of cabac, ref, deblock, analyse, me, subme, psy, psy_rd, mixed_ref, me_range, chroma_me, trellis, 8x8dct, cqm, deadzone, fast_pskip, chroma_qp_offset, threads, lookahead_threads, sliced_threads, nr, decimate, interlaced, bluray_compat, constrained_intra, bframes, b_pyramid, b_adapt, b_bias, direct, weightb, open_gop, weightp, keyint, keyint_min, scenecut, intra_refresh, rc_lookahead, rc, mbtree, crf, qcomp, qpmin, qpmax, qpstep, ip_ratio, and aq, and encoding parameter values supporting the respective encoding parameters. The parameter information 225 may vary depending on the type of the second video encoder 223. When a plurality of different video encoders are included in the server memory 220, the parameter information 225 may include encoding parameters corresponding to each video encoder and encoding parameter values supporting the corresponding encoding parameters.

The second encoded video content 227 may include video content encoded from the second video content 221 by the second video encoder 223 under the control of the server processor 250. For example, the second encoded video content 227 may include video content encoded with optimal encoding parameter values for scene groups in which the second video content 221 is segmented into scenes and then the segmented scenes are defined into a plurality of video clips of a certain length. The second matching information 229 may include matching information of encoding parameter values used to encode the scene groups, segmentation information (or identification information) of the scene groups, and identification information of the video encoder used.

Additionally, the server memory 220 may store a video player capable of playing the second encoded video content 227. For example, the second encoded video content 227 may include versions corresponding to various video encoders, and thus the server memory 220 may include various video players and, in response to a request from the user terminal 100, provide the user terminal 100 with a program corresponding to the video player capable of playing the second encoded video content 227.

The server display 240 can output at least one screen related to the operation of the server device 200. For example, the server display 240 may output at least one screen from among a screen indicating a connection status with the user terminal 100, an access screen to be provided to the user terminal 100, and a screen indicating an access status of another user terminal or an external server device that provides the second video content 221 other than the user terminal 100. In another example, the server display 240 may also output a screen corresponding to at least a part of a process of generating the second encoded video content 227 based on the second video content 221.

The server processor 250 may perform at least one of operations of receiving, transmitting, and processing a signal related to the operation of the server device 200, and storing or transmitting the result of processing. For example, the server processor 250 may generate and provide the second encoded video content 227 based on the second video content 221. In this regard, the server processor 250 may include components as illustrated in FIG. 4. Referring to FIG. 4, the server processor 250 may include a video collection unit 251, a scene detection unit 252, a scene extraction unit 253, a downsampling unit 254, an optimal parameter calculation unit 255, an encoded content generation unit 256, and a content provision unit 257. Here, the downsampling unit 254 may be omitted. The above-described server processor 250 can determine encoding parameter values (e.g., encoding parameter values of at least some of the encoding parameters included in the parameter information 225) of a video encoder (e.g., the second video encoder 223) to improve compression efficiency (or compression ratio) according to input video content (e.g., the second video content 221).

The video collection unit 251 can control video content collection. For example, the video collection unit 251 may form a communication channel with an external server device that provides video content at regular intervals, collect video content from the external server device, and store it in the server memory 220. Also, the video collection unit 251 may form a communication channel with at least one user terminal 100, and receive video content from the at least one user terminal 100. When video content is collected, the video collection unit 251 may transmit the collected video content to the scene detection unit 252.

The scene detection unit 252 can obtain the second video content 221 stored in the server memory 220 or obtain the video content from the video collection unit 251. The scene detection unit 252 can perform scene detection on the obtained second video content 221. In the present invention, a scene may include one scene. Or, the scene may include a scene based on a change in the background. Or, the scene may include a scene in which the number of objects on the screen changes. For example, when a new object is added to a screen or an object on a screen disappears, it can be determined that the scene has changed. Or, the scene detection unit 252 may apply a scene change detection technology to the second video content 221 to segment it into scenes. Or, the second video content 221 may include scene data (e.g., title for a scene or a group of scenes, table of contents, playback time of each scene, location information of each scene) recorded in accordance with at least one of the various scene definitions described above. The scene data may include data defining a scene transition point of the second video content 221. The scene detection unit 252 may detect scenes of the second video content 221 based on the scene data of the second video content 221. Or, the scene detection unit 252 may extract I-frames from the second video content 221 and compare the extracted I-frames with each other to determine whether there is a change greater than a predefined reference value. If there is any change greater than the predefined reference value, the scene detection unit 252 may detect, as one scene, up to the frame prior to the I-frame with the change greater than the reference value. For example, the scene detection unit 252 may define a scene transition itself, such as fade in/fade out or zoom in/zoom out, as one scene. A single scene may have a playback time of several seconds to several minutes.

The scene extraction unit 253 can multiply a start frame of a specific scene by predefined X seconds, using scene data or a scene transition point, and thereby extract one video clip (e.g., a video clip representing the scene among a plurality of video clips wherein one scene may include at least one video clip or a plurality of clips). The X value may vary depending on the total length of the scene. For example, if one scene is one minute long, the X value may be ten seconds, and one scene may be extracted as six video clips. The six video clips may have similar screen characteristics (or similar object characteristics) as they are segmented from one scene. For example, the six video clips may include similar backgrounds, similar numbers of objects, and similar objects.

The downsampling unit 254 can downsample at least a part of the video content applied to the optimal parameter calculation according to an embodiment of the present invention. For example, the downsampling unit 254 may lower the image quality of at least one video clip for each scene extracted by the scene extraction unit 253. In an example, if the pixels of one frame included in one video clip are 1000x1000, the downsampling unit 254 may downsample the corresponding frame to 100x100. As a method of reducing pixels, an interpolation method (e.g., a method of selecting an average value of pixel values of nine pixels) may be applied, or a method of selecting pixels to be deleted in a specified pattern (e.g., a method of selecting a central pixel among 9 pixels) or a method of randomly selecting them may be applied.

The optimal parameter calculation unit 255 can calculate optimal encoding parameter values for each scene by applying an optimal encoding parameter value calculation algorithm to at least one video clip (or representative video clips for each scene) for each scene provided by the scene extraction unit 253. Additionally, the optimal parameter calculation unit 255 can perform downsampling of the second video content 221 by using the downsampling unit 254 according to the playback length of the second video content 221, and apply the optimal encoding parameter value calculation algorithm to the downsampled second video content. In relation to applying the optimal encoding parameter value calculation algorithm, the optimal parameter calculation unit 255 generates an array having a limited length for respective EPs (encoding parameters) (hereinafter referred to as EPs) (or respective EPs acquired from the parameter information 225 stored in the server memory 220) belonging to the second video encoder 223. In this process, the optimal parameter calculation unit 255 generates an array by sorting predefined assignable values for EPs having discrete values (limited length values). The optimal parameter calculation unit 255 generates an array having a limited number by discretizing EPs having continuous values through quantization. The optimal parameter calculation unit 255 generates an array by sorting EPs of categorical series rather than numerical values based on computational complexity.

The optimal parameter calculation unit 255 sets an initial EP value for a specific EP. When the EPs included in the parameter information 225 for a specific video encoder are composed of N, the EP set can be expressed as {EP₀, EP₁, ..., EP_{N-1}}. Each of the respective EPs (e.g., EP₀, EP₁, ..., EP_{N-1}) may include a plurality of EP values (or EP option values). The respective EPs may include the same number or different numbers of EP values. The corresponding information may be obtained from the parameter information 225. The optimal parameter calculation unit 255 may select a specific EP from the EP set according to a random method, receiving a user input signal, or a designated method, and determine an initial EP value among the EP values of the selected EP. In an example, the optimal parameter calculation unit 255 may determine a median value among the listing of multiple EP values as the initial value of the EP value.

The optimal parameter calculation unit 255 encodes at least a part of the video clip (e.g., the first I-frame of the video clip or one of the plurality of video clips) selected based on the initial EP value and measures the video quality. In relation to the video quality measurement, the optimal parameter calculation unit 255 may use psnr (peak signa-to-noise ratio), vmaf (video multimethod assessment fusion), ssim (structural similarity), LPIPS (Learned Perceptual Image Patch Similarity), etc., but the present invention is not limited thereto, and any quality metric can be applied as long as it is a video quality measurement standard that allows numerical comparison.

In relation to the selection of EP values, the optimal parameter calculation unit 255 may set the array index of each EP based on the initial EP value, and perform encoding on the video clip based on the target bitrate using the initial EP value to measure the video quality. The optimal parameter calculation unit 255 changes the array index value by +/-M for each EP among all EPs or N EPs (M is an integer greater than or equal to 1), performs encoding by applying the EP values corresponding to the selected array index according to the M change to the video clip, and then measures the video quality. In order to perform encoding on the video clip while updating the EP values, the optimal parameter calculation unit 255 may perform indexing on a plurality of EPs and indexing on EP values of respective EPs.

In an example, the EP value array indexes may be defined as a matrix (e.g., EPᵢⱼ) having the i^{th} row representing a plurality of EPs and the j^{th} column representing the EP values of respective EPs. Here, 'i' may correspond to the number (or order) of at least some (or all) of the EPs related to the video encoder. Here, when the EP values of respective EPs are set to different numbers, the 'j' values may vary for each EP value. The optimal parameter calculation unit 255 may set variables 'i' and 'j' to 0 as initial values, and select the array index of EPᵢⱼ by applying an arbitrary value excluding 0 to each of the 'i' and 'j' values. The optimal parameter calculation unit 255 may encode a video clip based on specific EP values selected in a specified method in the EPᵢⱼ array index, and measure the video quality. The optimal parameter calculation unit 255 may change the rows and columns of the array index EPᵢⱼ in a predefined specific method (e.g., sequential selection, odd or even selection, multiple selection).

In another example, the optimal parameter calculation unit 255 may perform EP selection and EP value selection based on a linear array. For example, the optimal parameter calculation unit 255 may list N EPs in one line and select an EP_{L} of a specific order (e.g., L^{th}) among them. In an example, the optimal parameter calculation unit 255 may select an EP value of a middle order among the N EPs. Alternatively, the optimal parameter calculation unit 255 may select EPs in a predefined selection method (e.g., sequential selection, odd or even selection, regular or irregular interspersed selection) for the order of the N EPs. Thereafter, the optimal parameter calculation unit 255 may select at least one EP value among K EP values supporting the selected EP according to a predetermined method, encode the video clip with the selected EP values, and measure the quality. For example, the optimal parameter calculation unit 255 may list K EP values of a specific EP in the order of -P, ..., -M, ..., 0 (middle order), ..., M, ..., P (-P to P are K pieces, M is less than or equal to P), select specific EP values (e.g., -M^{th}, M^{th}, and middle order EP values) among the listed EP values, perform encoding on the video clip, measure and compare the qualities, and calculate the optimal EP value. The optimal parameter calculation unit 255 may also apply a plurality of M values to select three or more EP values, and then compare the encoding results of the video clip with the three or more EP values to calculate the optimal EP value.

If the visual quality is not improved while the video clip is encoded with a plurality of EP values, the optimal parameter calculation unit 255 may stop the execution and determine the last EP value as the final EP value or repeat the updating EP indexes and calculating optimal EP values a predetermined number of times to determine the final EP value, thereby producing the optimal final EP value for a specific video clip. When applying the algorithm, the initial value of the encoding parameter is arbitrarily selected. Experimentally, the medium preset, which is a compromise setting between encoding time and compression performance, shows the best result as the initial value. Accordingly, the optimal parameter calculation unit 255 generally uses the medium preset defined as the initial value of the algorithm for finding the encoding parameter value. The bitrate is not included in the encoding parameter target for finding the optimal value.

The encoded content generation unit 256 can obtain optimal encoding parameter values for video clips representing the respective scenes from the optimal parameter calculation unit 255. The encoded content generation unit 256 can generate the second encoded video content 227 by encoding the respective scenes with respect to the obtained encoding parameter values. That is, the encoded content generation unit 256 can perform encoding on a scene-by-scene basis by using the optimal encoding parameter values found for video clips (or a video scene composed of a plurality of video clips) having common characteristics.

The content provision unit 257 can support the access of the user terminal 100 and provide the second encoded video content 227 upon the request of the user terminal 100. For example, in response to an access request of the user terminal 100, the content provision unit 257 may provide the user terminal 100 with a web page corresponding to the access and a list of the second encoded video content 227 stored in the server memory 220. Or, in response to a request of the user terminal 100, the content provision unit 257 may provide the user terminal 100 with at least one video player that can be installed in the user terminal 100 (e.g., a video player that can play the second encoded video content 227). The server device 200 can calculate optimal encoded parameter values for encoding parameters (an encoding parameter set) belonging to each of a plurality of video encoders for one second video content 221 and apply them to encoding. Therefore, the content provision unit 257 can identify the type of video player installed in each user terminal 100 and provide the user terminal 100 with the second encoded video content 227 of a type that can be played in the corresponding video player. In the process of providing the second encoded video content 227 to the user terminal 100, the content provision unit 257 can also provide the second matching information 229.

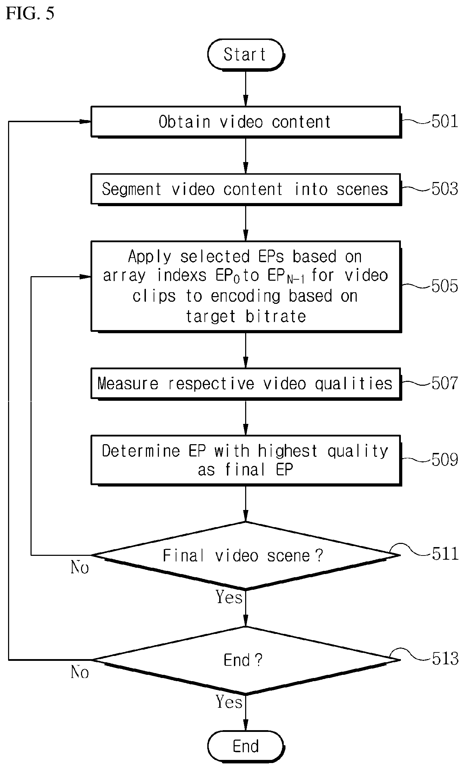

FIG. 5 is a diagram showing an example of an adaptive encoding parameter operation method according to an embodiment of the present invention.

Referring to FIGS. 1 to 5, in relation to the adaptive encoding parameter operation method according to an embodiment of the present invention, the server processor 250 of the server device 200 (or the processor 150 of the user terminal 100) may obtain video content in step 501 in response to an administrator input or predesignated scheduling information. For example, the server processor 250 may obtain video content previously stored in the server memory 220. Alternatively, the server processor 250 may obtain video content from the user terminal 100 or an external server device.

In step 503, the server processor 250 may perform scene segmentation for the video content. In an example, the server processor 250 may segment the video content by scene and generate at least one video clip based on the segmented scenes. For example, the server processor 250 may multiply each scene by a preset time in seconds to generate video clips and then store them in the server memory 220. Or, the server processor 250 may apply scene change detection technology to the video content to segment it into scenes. Or, the server processor 250 may detect scenes of the video content based on scene data (e.g., titles for scenes or a scene group, table of contents, playback times of each scene, location information of each scene, data defining scene transition points) recorded in relation to the video content. Or, the server processor 250 may recognize the next frame having a change more than or equal to a predefined reference value as a new scene by comparing frames. One scene may have a playback time of several seconds to several minutes. The server processor 250 may generate video clips in which scenes are segmented in units of predefined specific seconds (e.g., 10 seconds).

In step 505, the server processor 250 may perform encoding on a video clip corresponding to at least a part of the segmented scene, while applying EP values of at least one array index EP_{q} (q is zero or a natural number less than or equal to N-1) among the array indexes EP₀ to EP_{N-1} indicating N encoding parameters belonging to a pre-installed video encoder to the encoding based on a target bitrate. Alternatively, the server processor 250 may select at least some EPs in a predesignated manner for a plurality of EPs, and may perform encoding on the video clip by selecting a plurality of EP values among EP values supporting the selected respective EPs.

In step 507, the server processor 250 may measure video qualities of encoding results to which a plurality of EP values have been applied. For example, the server processor 250 may select a plurality of indexes smaller than N among EP₀ to EP_{N-1} according to a designated criterion and compare video qualities of encoding results in which EP values (encoding parameter values) corresponding to the selected EP indexes have been applied to video clips. Here, the criterion for selecting a plurality of indexes smaller than N among EP₀ to EP_{N-1} by the server processor 250 may include various manners. For example, the server processor 250 may randomly select a predetermined number of indexes from EP₀ to EP_{N-1}. Or, the server processor 250 may select a certain number of EP indexes according to EP characteristics (e.g., discrete EP, continuous EP, and categorical EP). Or, the server processor 250 may select one EP index for each EP characteristic, perform encoding based on EP values corresponding to the selected EP indexes, and then compare video qualities. Thereafter, the server processor 250 may select a predefined number of EP indexes from an EP characteristic group having the highest quality, and apply the EP values corresponding to the selected EP indexes to the video clip to measure video quality. In another example, the server processor 250 may repeatedly perform steps 505 to 507 described above until no quality improvement occurs or for a predetermined number of times.

In step 509, the server processor 250 may select EP values of the highest quality. That is, the server processor 250 may determine, as a final EP value, an EP value corresponding to an EP index that derives an encoding result of the highest quality among the EP values of the EP indexes selected in a predefined manner.

In step 511, the server processor 250 may check whether it is a final video scene. If it is not a final video scene, the server processor 250 may return to step 505 and re-perform the subsequent operations for video clips of another scene.

If it is a final video scene, the server processor 250 may check in step 513 whether an end event has occurred. If any end event has occurred, the server processor 250 may terminate the function of calculating and applying the optimal encoding parameter value. On the other hand, if there is no occurrence of an end event, the server processor 250 may return to step 501, acquire other video content, and re-perform the subsequent operations. Meanwhile, if the server processor 250 produces the final EP value for the video clip of the final video scene, it can perform encoding for the entire video content by applying the final EP values corresponding to the respective scenes. In this process, the server processor 250 may create matching information in which the scene identification information for each scene and the EP value (encoding parameter value) used for each scene are matched with each other, and store it in the server memory 220.

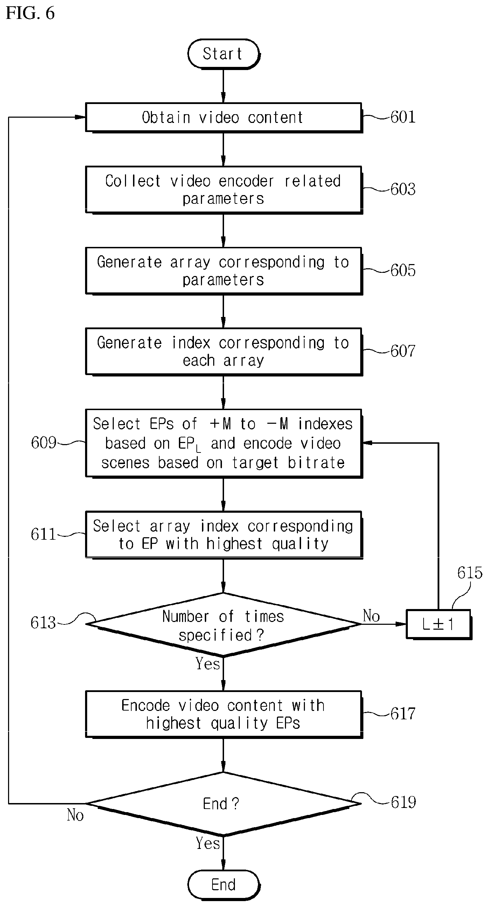

FIG. 6 is a diagram showing another example of an adaptive encoding parameter operation method according to an embodiment of the present invention.

Referring to FIGS. 1 to 6, in relation to the adaptive encoding parameter operation method according to an embodiment of the present invention, the server processor 250 of the server device 200 (or the processor 150 of the user terminal 100) may obtain video content in step 601. The process of obtaining the video content may correspond to the same step as step 501 described above.

In step 603, the server processor 250 may determine a video encoder to perform encoding on the obtained video content, and collect parameter information corresponding to the determined video encoder. In this regard, the server device 200 may store at least one video encoder and parameter information used in the at least one video encoder in the server memory 220 or may obtain them from an external server device. When there are a plurality of video encoders, the server processor 250 may select a designated video encoder according to the characteristics of the video content. In this regard, the server device 200 may store and manage matching information on the optimal video encoder for each video content characteristic (e.g., documentary, movie, drama, educational video, etc.). The information on the optimal video encoder may be obtained statistically or experimentally.

In step 605, the server processor 250 may generate an array corresponding to the parameters obtained from the parameter information. For example, the server processor 250 may generate an array by sorting predefined assignable values for EPs (encoding parameters) having discrete values (limited length values). The server processor 250 may generate an array having a limited number by discretizing EPs having continuous values through quantization. The server processor 250 may generate an array by sorting EPs of a categorical series based on computational complexity. In relation to the array generation, the server processor 250 may operate an array generator that generates a specific array by applying predefined rules to input EPs.

In step 607, the server processor 250 may generate an index corresponding to each of the generated arrays. In relation to the index generation, the server processor 250 may generate indexes that can distinguish each array according to the length and complexity of the array. For example, if the parameter information includes N parameters, the server processor 250 may generate indexes EP₀, EP₁, ..., EP_{N-1}. Additionally or alternatively, the server processor 250 may generate indexes for a plurality of EP values set to the respective EPs (e.g., EP₀, EP₁, ..., EP_{N-1}).

In step 609, the server processor 250 may select a specific EP_{L} among N EPs in a pre-designated manner, select a plurality of EP values among all EP values set to the selected EP_{L}, and perform encoding on a video scene (or a video clip corresponding to a part of the video scene) based on a target bitrate. For example, when K EP values are set in EP_{L}, the server processor 250 may select some EP values (e.g., EP values in a specific order from among the 0^{th} to K^{th} EP values, or EP values within a specific range) among the K EP values, and perform encoding on the video scene based on the selected EP values. Or, the server processor 250 may select +M^{th} and -M^{th} EP values based on a specific order among the sequence of EP values of the EP_{L}, and encode the video scene based on the target bitrate using the selected EP values. At this time, the indexes of other EPs are not changed. Or, the server processor 250 may perform encoding on the video scene with EP_{L} values (EP values) that have an integer y, where -M<=y<=M, as an array index.

In relation to encoding on the video scene, the server memory 230 may store a plurality of EPs, and each EP may include a plurality of EP values (e.g., when a specific EP is a QP, the EP value of the QP may be defined as [10, 22, 27, 32, 37, 42, 47]). The server processor 250 may define an array index for the plurality of EPs and an array index for the plurality of EP values for each of the EPs.

In an example, the server processor 250 may select EPs of +M to -M indexes based on EP_{L}, and encode the video scene based on the target bitrate. The EP_{L} is an index value indicating N EPs related to the video encoder, and may be a specific index among EP₀ to EP_{N-1}. For example, the EP_{L} may be an intermediate index between EP₀ and EP_{N-1}. In addition, the M may have a natural number value. The server processor 250 may select a plurality of EP indexes among EP₀ to EP_{N-1} according to the above-described criterion. For example, when M is 3 and it is configured to select three EP indexes, the server processor 250 may select EP indexes corresponding to EP_{L}, EP_{L+3}, and EP_{L-3}. The M value may be a value other than 3, and the server processor 250 may select two or more EP indexes between +M to -M. When a plurality of EP indexes are selected, the server processor 250 may apply a plurality of EP values set to the selected EP indexes to encoding on at least a part of a video scene. In this process, the server processor 250 may perform scene segmentation of the video content in step 503 described above in FIG. 5, obtain a video clip of several seconds in length based on the start point of each scene, and then perform video encoding by applying the plurality of selected EP values to the corresponding video clip. For higher-speed operation, the server processor 250 may perform downsampling (e.g., converting the video clip to a low-quality) on the obtained video clip, and then perform video encoding on the downsampled video clip.

In step 611, the server processor 250 may select an index of an EP value having the highest quality among encoding results to which the selected plurality of EP values are applied. In step 613, the server processor 250 may check whether the operation of selecting the index of the EP value having the highest quality has been performed a specified number of times or more, and if it has been performed less than the specified number of times, the server processor 250 may increase or decrease the L value for changing the EP index by 1 in step 615, and return to step 609 to re-perform the subsequent operations. The server processor 250 may perform the above-described steps 609 to 615 for all video scenes included in the video content. The increase or decrease of the L value by 1 may be performed in parallel. In this case, the server processor 250 may perform the increase and decrease of the EP index in parallel, and perform video encoding application for the video clips of the EP values set for the respective EP indexes.

When the specified number of times has arrived, in step 617, the server processor 250 may perform video content encoding with the highest quality EP values. For example, the server processor 250 may perform encoding on each entire video scene (e.g., video clips included in each video scene) with the highest quality EP values.

In step 619, the server processor 250 may check whether an end event has occurred that instructs the end of encoding on the video content. If any end event has occurred, the server processor 250 may terminate the function of calculating and applying the optimal EP value. On the other hand, if there is no end event occurrence, the server processor 250 may return to step 601, acquire other video content, and re-perform the subsequent operations.

As described above, according to an embodiment of the present invention, the adaptive encoding parameter operation method can extract at least one video clip for each scene of video content, calculate an encoding parameter value indicating optimal quality for a specific video clip (or at least one frame included in the specific video clip) for at least some encoding parameter values among a plurality of encoding parameters belonging to a video encoder, and perform video encoding on the video content including the entire scenes in a manner of performing encoding on one scene to which the plurality of video clips belong by using the calculated encoding parameter value, thereby obtaining an encoding result having optimal quality. Since the plurality of video clips belonging to one video scene have the same or similar screen characteristics, encoding with optimal quality is possible even if the same encoding parameter value is applied, and thus the optimal encoding parameter value can be calculated and operated with a relatively small amount of computation (e.g., encoding for a video clip corresponding to a part of a scene).

In an example, in relation to the adaptive encoding parameter operation method, the server processor 250 may perform a step of obtaining video content, a step of segmenting the video content into video scenes, a step of obtaining video clips corresponding to some of the respective video scenes, a step of performing video encoding on each of the video clips based on EP values (encoding parameter values) of at least some of the encoding parameters among all encoding parameters related to a video encoder to encode the video content, a step of calculating final encoding parameter values to be applied to each of the video clips based on an encoding result of the video encoding, and a step of performing video encoding on the video content by applying the calculated final encoding parameter values to the video scenes. The step of selecting (or calculating) the final encoding parameter values may be performed on each of the video clips. For example, for a specific video clip among the respective video clips, when the number of times specified is three, the server processor 250 may calculate a first encoding parameter value, a second encoding parameter value, and a third encoding parameter value, and determine an encoding parameter value with the highest quality among them as the final encoding parameter value. In relation to calculating the first encoding parameter value, the server processor 250 may perform a step of selecting a first plurality of encoding parameters from among all encoding parameters related to the video encoder, and performing a plurality of video encodings on a specific video clip based on at least some of encoding parameter values of the selected first plurality of encoding parameters, and a step of calculating the first encoding parameter value with the highest quality by comparing the qualities of the plurality of video encoding results. In relation to calculating the second encoding parameter value (or the third encoding parameter value), the server processor 250 may perform a step of selecting a second plurality of encoding parameters (or a third plurality of encoding parameters) that are different from the first plurality of encoding parameters, and performing a plurality of video encodings on the specific video clip based on at least some of encoding parameter values of the selected encoding parameters, and a step of calculating the second encoding parameter value (or the third encoding parameter value) with the highest quality for the specific video clip by comparing the qualities of the plurality of video encoding results. Finally, the server processor 250 may compare the video encoding qualities of the first to third encoding parameter values with each other to select the encoding parameter value with the highest quality as the final encoding parameter value.

In another example, the server processor 250 may perform, in relation to calculating the final encoding parameter value, a step of classifying all of the encoding parameters by characteristics, a step of sampling encoding parameters from each of encoding parameter groups classified by the characteristics, and video-encoding the video clips by using at least some of the encoding parameter values set to the sampled encoding parameters, a step of selecting a specific encoding parameter value indicating an encoding result of highest quality, a step of selecting a plurality of encoding parameters from a characteristic group including the specific encoding parameter value, a step of video-encoding the video clips based on the encoding parameter values set to the plurality of selected encoding parameters, and a step of calculating an encoding parameter value with highest quality among the encoding results as the final encoding parameter value.

While the description contains many specific implementation details, these should not be construed as limitations on the scope of the present disclosure or of what may be claimed, but rather as descriptions of features that may be specific to particular embodiments of particular disclosure.

Also, although the description describes that operations are performed in a predetermined order with reference to a drawing, it should not be construed that the operations are required to be performed sequentially or in the predetermined order, which is illustrated to obtain a preferable result, or that all of the illustrated operations are required to be performed. In some cases, multitasking and parallel processing may be advantageous. Also, it should not be construed that the division of various system components are required in all types of implementation. It should be understood that the described program components and systems are generally integrated as a single software product or packaged into a multiple-software product.

The description shows the best mode of the present disclosure and provides examples to illustrate the present disclosure and to enable a person skilled in the art to make and use the present disclosure. The present disclosure is not limited by the specific terms used herein. Based on the above-described embodiments, one of ordinary skill in the art can modify, alter, or change the embodiments without departing from the scope of the present disclosure.

Accordingly, the scope of the present disclosure should not be limited by the described embodiments and should be defined by the appended claims.

### [Description of Reference Numeral]

50: Network
100: User terminal
110: Communication circuit
120: Memory
130: Camera
140: Display
150: Processor
160: Input unit
200: Server device
210: Server communication circuit
220: Server memory
240: Server display
250: Server processor

## Claims

1. An adaptive video encoding parameter operation method comprising:
by a server processor of a server device, obtaining video content;
segmenting the video content into video scenes;
obtaining video clips corresponding to some of the respective video scenes;
performing video encoding on each of the video clips based on encoding parameter values set for at least some encoding parameters among all encoding parameters related to a video encoder to encode the video content;
calculating final encoding parameter values to be applied to each of the video clips based on an encoding result of the video encoding; and
performing video encoding on the video content by applying the calculated final encoding parameter values to the video scenes,
wherein calculating the final encoding parameter values comprises:
assigning array indexes to the encoding parameter values of the at least some encoding parameters, selecting a plurality of array indexes among the array indexes in accordance with a predefined scheme, and performing encoding on the video clips based on a plurality of encoding parameter values corresponding to the selected array indexes to detect encoding parameter values of optimal quality.

2. The method of claim 1, wherein calculating the encoding parameter values of the optimal quality comprises:
selecting a first plurality of encoding parameters from among all encoding parameters related to the video encoder, and performing a plurality of video encodings on a specific video clip by using a plurality of encoding parameter values set to the selected first plurality of encoding parameters; and
calculating a first encoding parameter value of highest quality by comparing qualities of the plurality of video encoding results.

3. The method of claim 2, wherein calculating the encoding parameter values of the optimal quality comprises:
selecting a second plurality of encoding parameters different from the first plurality of encoding parameters, and performing a plurality of video encodings on the specific video clip by using a plurality of encoding parameter values set to the selected second plurality of encoding parameters;
calculating a second encoding parameter value of highest quality for the specific video clip by comparing qualities of the plurality of video encoding results; and
comparing a video encoding quality of the first encoding parameter value and a video encoding quality of the second encoding parameter value with each other to select an encoding parameter value of highest quality as the final encoding parameter value.

4. The method of claim 3, further comprising:
video-encoding a video scene to which the specific video clip belongs based on the final encoding parameter value.

5. The method of claim 1, wherein calculating the final encoding parameter values comprises:
classifying the entire encoding parameters by characteristics;
sampling encoding parameters from each of encoding parameter groups classified by the characteristics, and video-encoding the video clips with encoding parameter values set to the sampled encoding parameters;
selecting a plurality of encoding parameters from a group including a specific encoding parameter value indicating a highest quality encoding result;
video-encoding the video clips based on encoding parameter values set to the selected plurality of encoding parameters; and
calculating an encoding parameter value of highest quality among the encoding results as the final encoding parameter.

6. The method of claim 1, further comprising:
defining the entire encoding parameters as an array index,
wherein defining the array index comprises at least one of:
generating the array index by sorting predefined assignable values for encoding parameters having a limited length of encoding parameter;
generating an array index having a limited number by discretizing encoding parameters having continuous values through quantization; or
generating an array index by sorting categorical series encoding parameters based on computational complexity.

7. The method of claim 1, wherein performing video encoding on each of the video clips comprises:
performing downsampling for each of the video clips; and
performing video encoding on the downsampled video clips.

8. A server device supporting an adaptive video encoding parameter operation, comprising:
a server memory storing video content; and
a server processor functionally connected to the server memory,
the server processor configured to:
obtain video content, segment the video content into video scenes, obtain video clips corresponding to some of the respective video scenes, perform video encoding on each of the video clips based on encoding parameter values set for at least some encoding parameters among all encoding parameters related to a video encoder to encode the video content, calculate final encoding parameter values to be applied to each of the video clips based on an encoding result of the video encoding, and perform video encoding on the video content by applying the calculated final encoding parameter values to the video scenes, and
the server processor configured to:
assign array indexes to the encoding parameter values of the at least some encoding parameters, select a plurality of array indexes among the array indexes in accordance with a predefined scheme, and perform encoding on the video clips based on a plurality of encoding parameter values corresponding to the selected array indexes to detect encoding parameter values of optimal quality.

9. The server device of claim 8, wherein the server processor is configured to:
select a first plurality of encoding parameters from among all encoding parameters related to the video encoder, perform a plurality of video encodings on a specific video clip by using a plurality of encoding parameter values set to the selected first plurality of encoding parameters, and calculate a first encoding parameter value of highest quality by comparing qualities of the plurality of video encoding results.

10. The server device of claim 9, wherein the server processor is configured to:
select a second plurality of encoding parameters different from the first plurality of encoding parameters, perform a plurality of video encodings on the specific video clip by using a plurality of encoding parameter values set to the selected second plurality of encoding parameters, calculate a second encoding parameter value of highest quality for the specific video clip by comparing qualities of the plurality of video encoding results, and compare a video encoding quality of the first encoding parameter value and a video encoding quality of the second encoding parameter value with each other to select an encoding parameter value of highest quality as the final encoding parameter value.

11. The server device of claim 10, wherein the server processor is configured to:
video-encode a video scene to which the specific video clip belongs based on the final encoding parameter value.

12. The server device of claim 8, wherein the server processor is configured to:
classify the entire encoding parameters by characteristics, video-encodes the video clips based on encoding parameter values of encoding parameters sampled from encoding parameter groups classified by the characteristics, select a plurality of encoding parameters from a group including a specific encoding parameter value indicating a highest quality encoding result, video-encode the video clips based on encoding parameter values set to the selected plurality of encoding parameters, and calculate an encoding parameter value of highest quality among the encoding results as the final encoding parameter.

13. The server device of claim 8, wherein the server processor is configured to:
in relation to defining the entire encoding parameters as an array index,
generate the array index by sorting predefined assignable values for encoding parameters having a limited length of encoding parameter,
generate an array index having a limited number by discretizing encoding parameters having continuous values through quantization, or
generate an array index by sorting categorical series encoding parameters based on computational complexity.

14. The server device of claim 8, wherein the server processor is configured to:
perform downsampling for each of the video clips, and perform video encoding on the downsampled video clips.
